**Europäisches Patentamt**

**European Patent Office**

**Office européen des brevets**

(19)

(11) Numéro de publication: **0 124 484**
**A2**

## (12) DEMANDE DE BREVET EUROPEEN

(21) Numéro de dépôt: **84810198.6**

(22) Date de dépôt: **26.04.84**

(51) Int. Cl.³: **G 01 K 1/14,** A 47 J 27/212, F 16 B 31/02

(30) Priorité: **29.04.83 CH 2336/83**

(43) Date de publication de la demande: **07.11.84**
**Bulletin 84/45**

(84) Etats contractants désignés: **AT BE CH DE FR GB IT LI LU NL SE**

(71) Demandeur: **MESINVEST N.V., c/o Corporate Trust N.V. 16a Pietermaai, Curaçao Netherlands Antilles (NL)**

(72) Inventeur: **Winteler, Hans Rudolf, Chemin des Granges, Arzier (CH)**
Inventeur: **Favre, Charles-André, Chemin Cassinette 2, Lausanne (CH)**

(74) Mandataire: **Kirker, Gaylord Emile et al, c/o KIRKER & Cie S.A. 14, Rue du Mont-Blanc Case postale 872, CH-1211 Genève 1 (CH)**

(54) **Dispositif thermométrique pour récipient de cuisson.**

(57) Le boîtier (11) qui forme une chambre (13) dans laquelle est disposé l'élément thermométrique spiral bimétallique (27) et l'équipage tournant (29, 30) servant à indiquer la température à travers la glace (15) fermant hermétiquement la chambre (13), est de préférence en matière plastique. L'élément thermométrique (27) est disposé à plat sur la face intérieure du fond (14) du boîtier (11). Des moyens de fixation comprenant une partie (20-23) solidaire du couvercle (12), et comprenant des doigts radiaux (24-26) solidaires du boîtier (11), constituent ensemble des moyens du type à baïonnette pour fixer le boîtier (11) au couvercle (12) et pour appliquer fortement le fond (14) du boîtier contre le couvercle, afin de l'obliger à épouser exactement la forme de ce couvercle. Ainsi, la transmission thermique du couvercle (12) à l'élément thermométrique (27) a lieu dans de bonnes conditions et par conduction à travers le fond (14) du boîtier (11).

EP 0 124 484 A2

/

## Dispositif thermométrique pour récipient de cuisson

On connaît déjà des dispositifs thermométriques pour couvercle de récipient de cuisson comportant un boîtier métallique formant bouton de couvercle et qui possède un fond rigide dont la surface extérieure est conformée pour s'appliquer étroitement sur la surface du couvercle, un élément thermométrique spiral bimétallique étant disposé dans ce boîtier, un équipage mobile indicateur de température étant monté pour tourner dans ce boîtier et pour être entraîné par une extrémité du spiral, dont l'autre extrémité est fixée au dit boîtier, une glace fermant la partie supérieure de ce boîtier en laissant voir à travers elle la partie indicatrice de l'équipage mobile, une tige filetée étant soudée au couvercle et le boîtier se vissant sur cette tige pour amener le boîtier en contact intime avec le couvercle. Le brevet suisse No 610.659 et la demande de brevet français correspondante No 78 02200 montrent un dispositif de ce type. Cette construction connue présente toutefois l'inconvénient qu'il est difficile de réaliser un bon contact entre le fond rigide du boîtier et le couvercle, ce qui est pourtant une condition pour assurer une bonne transmission thermique à l'élément thermométrique. Il est nécessaire de donner à la surface du boîtier s'appliquant contre le couvercle une forme très exactement adaptée à celle du couvercle, et, pour tenir compte des différences résiduelles inévitables, on est conduit à visser très fortement le boîtier sur la tige filetée prévue pour sa fixation, ce qui peut produire, en cas de serrage exagéré, l'arrachement de cette tige ou la déformation du couvercle et une mauvaise transmission thermique entre le couvercle et ce boîtier.

De plus, dans cette construction connue, la transmission de la chaleur du fond du boîtier à l'élément thermométrique n'est pas suffisamment bonne, d'où inertie thermique trop grande.

On a proposé (brevet belge No 892.842) d'appliquer le fond du boîtier (métallique) contre le couvercle du récipient, grâce à la force élastique exercée sur ce boîtier par une jupe en matière plastique qui en est solidaire et qui fait fonction de ventouse lorsqu'on l'applique sur le couvercle. Il est clair que cet effet de ventouse ne peut que produire une faible force d'application du fond du boîtier contre le couvercle, absolument insuffisante pour que ce fond se déforme et prenne la forme du couvercle lorsque celui-ci n'est pas plan.

La présente invention vise à remédier à ces inconvénients et a pour objet un dispositif thermométrique conforme à la revendication 1.

Les dessins annexés représentent, à titre d'exemples, plusieurs formes d'exécution du dispositif selon l'invention.

Fig. 1 est une vue en coupe axiale selon 1-1 de fig. 2 , d'une première forme d'exécution, montrant les organes en place avant fixation du boîtier sur le couvercle du récipient.

Fig. 2 est une vue en coupe transversale selon 2-2 de fig. 1.

Fig. 3 est une vue analogue à fig. 1, partiellement en vue latérale, partiellement en coupe, montrant les organes en position du boîtier fixé sur le couvercle du récipient.

4

Fig. 4 est une vue partielle en plan correspondant à la fig. 1.

Les figures 5 à 9 sont des diagrammes explicatifs du fonctionnement de cette première forme d'exécution.

Fig. 10 est une vue analogue à la figure 1, mais relative à une deuxième forme d'exécution.

Fig. 11 est une vue en coupe transversale selon 11-11 de fig. 10.

Fig. 12 est une vue en coupe à plus grande échelle des détails de cette deuxième forme d'exécution.

Fig. 13 est une vue en coupe selon 13-13 de fig. 12.

Fig. 14 est une autre vue de détail en coupe, à plus grande échelle encore, selon 14-14 de fig. 13.

Fig. 15 est une vue analogue à fig. 12 mais relative à une autre variante.

Fig. 16 est une vue en coupe selon 16-16 de fig. 15.

Fig. 17 est une vue analogue à la fig. 1 mais relative à une troisième forme d'exécution.

Fig. 18 est une vue en plan correspondant à la fig. 17.

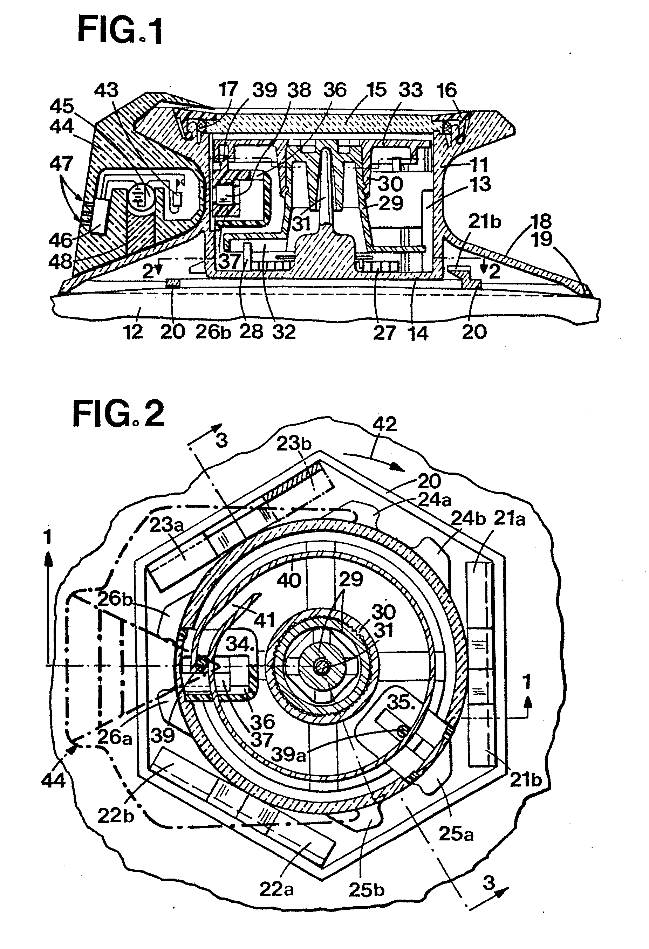

La première forme d'exécution, selon fig. 1 à 4, comprend un boîtier 11 en matière plastique telle que du polyethersulfone , destiné à être fixé sur un couvercle métallique de récipient de cuisson, visible partiellement en 12, pour former à la fois un bouton de couvercle et un indicateur de température.

Le boîtier 11 présente à son intérieur une chambre 13 qui est fermée, en bas, par un fond 14 faisant partie du boîtier 11, et en haut par une glace 15.

Cette glace est pressée en place contre la partie supérieure du corps 11 par une lunette 16 métallisée, s'encliquetant dans une rainure du boîtier 11. Un anneau d'étanchéité 17 est pressé par la lunette 16 pour fermer toute communication entre le bord de la glace 15 et la partie supérieure du corps 11. Le boîtier 11 présente une jupe 18 s'étendant extérieure-et obliquement vers le bas. Lorsqu'on veut fixer le boîtier 11 au couvercle 12, on le pose comme représenté sur la fig. 1, sur la partie centrale du couvercle 12, de façon qu'il repose sur ce couvercle par le bord extérieur circulaire 19 de la jupe 18. Le fond 14 se trouve alors à une certaine distance au-dessus du couvercle 12.

Pour assurer, d'une part la fixation du boîtier 11 au couvercle 12 et, d'autre part, la mise en contact étroit du fond 14, par toute sa surface, avec ce couvercle, il est prévu les moyens de fixation suivants : une pièce d'acier inoxydable 20 présentant, vue en plan (fig. 2) une forme hexagonale, est fixée au couvercle 12, par soudage. Trois des côtés de la pièce 20 situés à 120° l'un de l'autre sont munis chacun d'une partie recourbée vers l'intérieur 21a, 21b, 22a, 22b, 23a, 23b, séparées par une partie en V pour former arrêt de position. Le boîtier 11 présente dans sa partie latérale, mais à proximité du fond 14, trois paires de doigts 24a, 24b, 25a, 25b, 26a, 26b entre lesquels la partie en V vient s'engager.

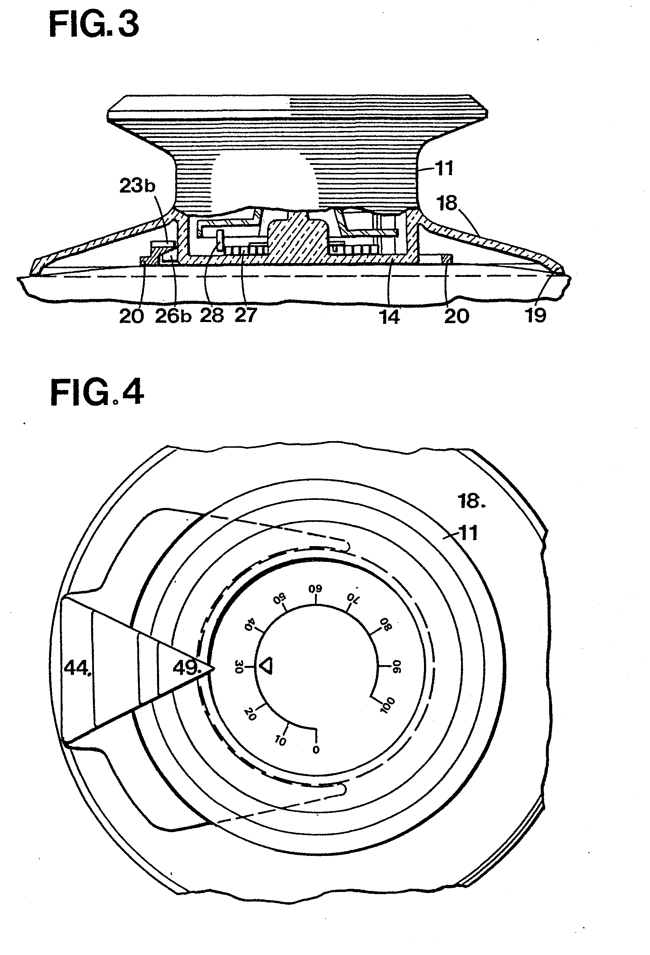

Pour fixer le corps 11 sur le couvercle, on presse axialement sur lui pour rapprocher le fond 14 du couvercle et on fait tourner de manière à engager les doigts 24a, 24b, 25a, 25b, 26a, 26b, de part et d'autre des parties en V de la pièce 20, comme représenté sur la fig. 3. Ce mécanisme constitue en fait une fixation à baïonnette. Ainsi, le fond 14 du corps 11 est fortement pressé contre le couvercle, ce qui assure une bonne transmission thermique de ce couvercle à ce fond. Les parties 21, 22, 23 sont légèrement élastiques mais suffisamment fortes pour assurer une pression du fond 14 contre le couvercle 12. Sous l'effet de cette force d'application, la matière du fond 14 se déforme élastiquement pour épouser exactement la forme du couvercle, ce qui est très important, comme il sera expliqué plus loin.

Pendant le mouvement de rapprochement du fond 14 jusqu'à faire contact avec le couvercle 12, la jupe 18 reste constamment en contact avec le couvercle par son bord 19, mais se déforme élastiquement pour passer de la position représentée à la fig. 1 à celle visible sur la fig. 2. Cette jupe forme ainsi une chambre fermée à l'intérieur de laquelle les moyens de fixation que l'on vient de décrire sont à l'abri de l'eau lorsqu'on nettoie le couvercle.

Un élément thermométrique spiral bimétallique 27 est disposé à plat contre la face intérieure du fond 14. Son extrémité interne est fixée au corps 11 tandis que son extrémité externe est libre et solidaire d'une goupille verticale 28. Un équipage tournant formé de deux pièces 29 et 30 encliquetées l'une sur l'autre, est monté sur un pivot central 31 solidaire du fond 14. Le doigt 28 est engagé dans une rainure radiale 32 prévue à la base de la partie inférieure 29 de l'équipage mobile. Ainsi, lorsque le doigt 28 se déplace angulairement sous l'effet d'une variation de température de l'élément thermométrique spiral 27, il entraîne en rotation l'équipage 29, 30. La partie supérieure 33 de l'équipage mobile a la forme d'un disque qui est visible à travers la glace 15. Il est prévu de préférence une échelle de températures sur la face interne de la glace 15, tandis que la face visible du disque 33 présente un repère se déplaçant en regard de cette échelle, pour indiquer la température mesurée par l'élément 27.

L'expérience a montré que le frottement entre l'élément métallique thermométrique 27 et le fond 14 en matière plastique est négligeable et n'a aucun effet sensible sur l'exactitude de la température indiquée par le dispositif. Elle a montré aussi que la transmission thermique du couvercle 12 à l'élément 27, par conduction à travers le fond 14, est excellente grâce au bon contact entre ce fond et le couvercle. D'ailleurs, il y a avantage à prévoir, comme représenté sur le dessin, que le fond 14 est plus mince que la paroi latérale du boîtier 11. Cela facilite l'adaptation du fond à la forme du couvercle et la transmission de chaleur à travers lui. De plus, on choisira avantageusement une couleur foncée pour le boîtier (de préférence noire) ce qui favorise le transfert de

*6*

chaleur par rayonnement.

Le dispositif décrit comporte en outre des moyens que l'on va décrire maintenant et qui servent à donner un signal sonore lorsque la température mesurée par l'élément 27 atteint une valeur choisie d'avance.

A l'intérieur du corps 11, il est prévu deux petits boîtiers 34, 35 identiques, mais angulairement décalés l'un par rapport à l'autre comme on le voit sur la fig. 2. On ne décrira en détail que le boîtier 34. Ce boîtier comporte une rainure 36 dans laquelle peut glisser radialement une pièce mobile 37, en matière plastique, dans laquelle est logé un petit aimant permanent 38. Ce corps 37 présente à sa partie supérieure un doigt 39 destiné à coopérer avec une came 40 ayant la forme que l'on peut voir sur la fig. 2. La position des organes représentée sur la fig. 2 correspond à une température dans le récipient de 30 à 40°C qui représente la fin du chauffage rapide des aliments. Dans cette position, le doigt 39 est engagé entre deux parties de la came 40 qui forment un canal oblique 41. La majeure partie de la came 40 est de forme circulaire.

On expliquera plus loin le fonctionnement en détail de la came et du doigt 39. Lorsque l'équipage mobile 29, 30 et avec lui la came 40 tournent dans le sens de la flèche 42, sous l'effet de l'élévation de la température, le doigt 39 est commandé par la came pour se trouver soit rapproché de la paroi du récipient 11, soit éloigné de celle-ci. Dans la position rapprochée, il agit sur un interrupteur 43 du type Reed qui comprend une lame fixe et une lame mobile en métal ferro-magnétique, ces deux lames étant encloses dans une capsule étanche. Lorsque l'aimant 38 se trouve rapproché au maximum de l'interrupteur 43, celui-ci se ferme. Lorsque l'aimant 38 est amené dans sa position éloignée, cet interrupteur s'ouvre. Cet interrupteur est disposé dans un logement prévu dans un curseur circulaire 44 engagé sur le pourtour du corps 11 et capable de tourner à frottement doux sur la péri-

*7*

phérie de ce corps. A l'intérieur du curseur 44, se trouvent une pile électrique 45 et un buzzer 46. La fermeture de l'interrupteur 43 a pour effet d'actionner le buzzer dont le son passe à l'extérieur à travers des orifices 47 du curseur. Ce curseur et avec lui les organes qu'il contient constituent un capteur-avertisseur acoustique. Un bouchon 48 est prévu pour permettre le remplacement de la pile 45.

Sur les fig. 2 et 4 on a représenté le curseur 44 dans une position correspondant à la température de 30°, c'est-à-dire au moment où l'usager doit être averti que cette température est atteinte. Pour être averti lorsque la température prédéterminée de, par exemple, 95°C est atteinte, il suffit à l'usager de faire tourner le curseur 44 de façon que son index 49 se trouve en regard de cette température . Lorsque cette température est atteinte, ce sont alors les moyens disposés dans le boîtier 35 qui commanderont le signal acoustique.

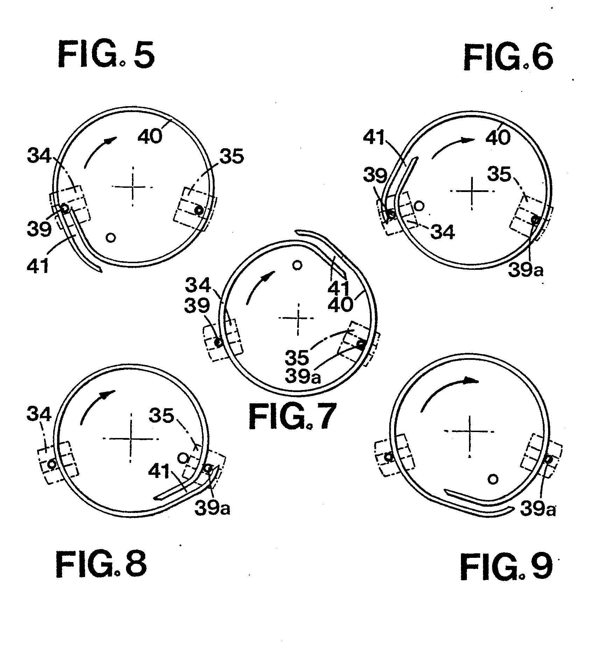

Les fig. 5 à 9 représentent la came 40 dans différentes positions angulaires correspondant à des températures mesurées allant de la température ambiante (fig. 5) à une température maximum qui peut être de 120°C par exemple.

Sur la fig. 5, la came se trouve dans la position correspondant à la température ambiante, le doigt 39 se trouve à l'entrée du canal 41 et occupe sa position la plus rapprochée de l'axe du dispositif. Son aimant 38 (fig. 1) n'a pas d'effet sur l'interrupteur 43.

La fig. 6 représente la position des organes lorsque la température de fin de chauffage rapide (par exemple 30°) est atteinte. On voit que, pour passer de la fig. 5 à la fig. 6, le doigt 39 a suivi le canal 41 et a été obligé de ce fait par la came 40 de venir occuper sa position la plus rapprochée de l'interrupteur 43. Dans ces conditions, l'aimant 38 ferme le contact de l'interrupteur 43 et le signal acoustique est donné par le buzzer 46. L'usager étant averti par le signal, déplace angulairement le curseur 44 de la position où il se trouvait en regard de 34 pour l'amener en regard de 35, qui correspond à une température de cuisson de par exemple 95°C
Dès lors la température continuant d'augmenter dans le récipient, l'équipage mobile continue de tourner, le buzzer ayant
cessé de fonctionner et on passe par la position selon fig. 7.
Pour cette position de l'équipage mobile, le doigt 39a de 35
qui est en contact avec le côté interne de la came 40, tandis
que le doigt 39 est en contact avec le côté externe de cette
came, se trouve dans sa position la plus rapprochée de l'axe
de rotation. L'équipage mobile continuant de tourner avec la
température qui augmente, le doigt 39 arrive à l'entrée du
canal 41, ce qui le conduit dans la position représentée
sur la fig. 8 où il se trouve alors dans sa position la plus
éloignée de l'axe de rotation et, par conséquent, dans sa
position la plus rapprochée de l'interrupteur 43. Dès lors,
le buzzer fonctionne à nouveau pour signaler que la température maximum est atteinte. Si la température continue à monter
jusqu'à par exemple 120°C, les organes prennent la position
représentée sur la fig. 7, pour laquelle le buzzer continue
de fonctionner. L'usager arrête alors le chauffage, la came 40
tourne en sens inverse des flèches indiquées et revient progressivement dans la position selon fig. 5.

On voit de ce qui précède que le dispositif décrit
permet de signaler acoustiquement lorsque la température du
récipient atteint l'une ou l'autre de deux températures prédéterminées correspondant à la position angulaire de 34 et 35.

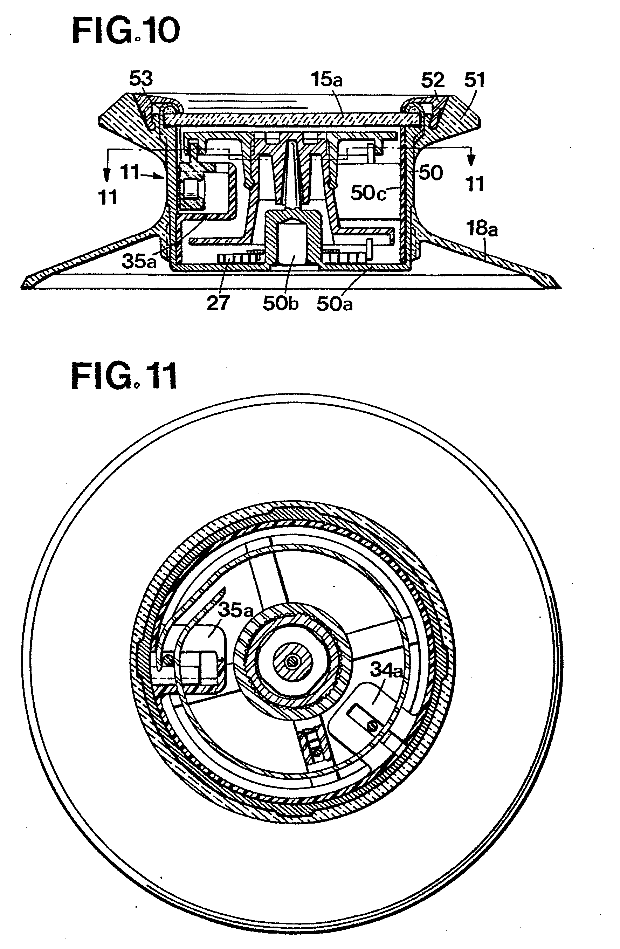

La forme d'exécution selon fig. 10 et 11 ne diffère
de celle qui vient d'être décrite que sur certains points
que l'on va décrire maintenant en se dispensant de décrire
ce qui est inchangé.

Dans cette deuxième exécution, le corps du dispositif comprend une boîte métallique 50 sur la paroi latérale
de laquelle sont fixés par encliquetage, d'une part une jupe
18a analogue à 18 et un anneau supérieur 51 en matière plastique sur lequel vient s'encliqueter une lunette 52 après que
l'on ait enroulé annulairement la partie terminale supérieure de 50, comme on le voit en 53. Cette partie ainsi enroulée
vient maintenir en place la glace 15a analogue à 15. Des
anneaux d'étanchéité non représentés sont évidemment prévus
pour fermer de façon étanche l'ensemble formé par la glace 15a
et la boîte 50. Dans cet exemple, les moyens de fixation du
boîtier 11 au couvercle non représenté sur les fig. 10 et 11
sont différents de ceux décrits à propos de la première forme
d'exécution.

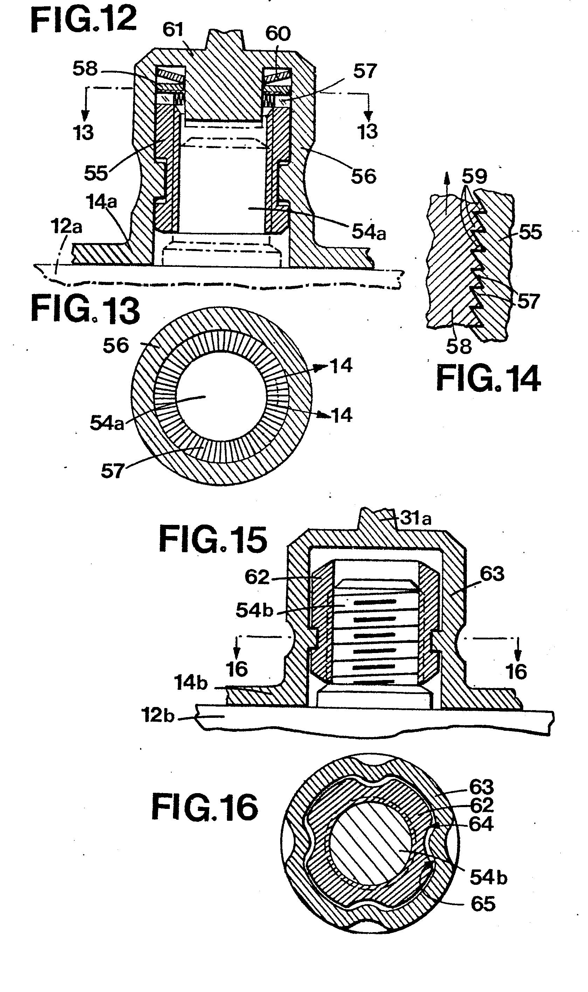

    Le fond 50a de la boîte 50 présente, dans sa partie
centrale, un évidement 50b dans lequel viennent s'engager des
moyens de fixation du dispositif au couvercle du récipient.
Ces moyens peuvent être, par exemple, ceux que l'on va décrire
en référence aux figures 12 - 14 ou 15 et 16. Cette forme d'exécution diffère encore de la première par le fait que les
parties 34 et 35 dans lesquelles sont montés coulissants les
petits aimants ne sont pas fixées à la boîte 11 elle-même,
mais sont solidaires d'un corps cylindrique 50c logé dans la
boîte 50 entre le fond 50a et la glace 15a. Les parties correspondant à 34 et 35 sont indiquées en 34a et 35a. On remarquera que le fond 50a est plus mince que la partie cylindrique de la boîte 50, pour permettre à ce fond de se déformer
élastiquement lorsqu'on le presse contre le couvercle, en
sorte qu'il puisse épouser exactement la forme de celui-ci et
assurer ainsi une bonne transmission thermique à l'élément
thermométrique spiral 27a qui est disposé au contact de la
face intérieure de ce fond.

    Les fig. 12 - 14 représentent une fixation de ce
type, mais pourvue de moyens de sécurité consistant en un
limiteur de couple. On a admis que dans ces figures le boîtier
est du même type que celui selon fig. 1, avec toutefois quelques différences que l'on va mentionner.

    Comme on le voit sur la fig. 12, cette fixation a
lieu au moyen d'une tige filetée 54a soudée sur le couvercle
12a. Un écrou 55 est vissé sur le filet de la tige 54a. Cet
écrou est disposé dans un évidement central d'une protubérance 56 solidaire du fond 14a du boîtier tel que 11. Des moyens limiteurs de couple sont prévus entre la protubérance 56 et l'écrou 55; ils comprennent une denture 57 pratiquée dans la face supérieure annulaire de l'écrou 55. Les dents de cette denture présentent un flanc radial et un flanc oblique, comme il est visible sur la fig. 14. Ces moyens comprennent aussi une rondelle 58 disposée en regard de la denture 57 et présentant, dans sa face regardant l'écrou 55 une denture 59 présentant des dents ayant elles aussi un flanc radial et un flanc oblique, disposés comme le montre la figure 14. Une rondelle 60 formant ressort de compression est disposée entre la rondelle dentée 58 et le fond 61 de la protubérance 56. Le fonctionnement est le suivant : lorsqu'on visse l'écrou 55 sur la tige filetée 54a pour fixer le boîtier au couvercle et pour appliquer le fond 61 de la boîte 50 fortement sur le couvercle, tant que le couple exercé sur le boîtier n'atteint pas une valeur prédéterminée, la rondelle ressort 60 maintient les dentures 57 et 59 en prise, les flancs obliques des deux dentures étant alors en contact d'entraînement. Dès qu'on atteint le couple limite fixé, la rondelle ressort 60 cède et la denture 59 cesse d'entraîner la denture 57 et glisse sur elle. Bien entendu, la rondelle 58 est fixe en rotation par rapport à la protubérance 56 du boîtier.

Dans la variante des moyens de fixation représentée sur les fig. 15 et 16, la tige filetée 54b est soudée au couvercle 12b et un écrou 62 est vissé sur le filet de cette tige 54b. Cet écrou est disposé dans un évidement central d'une protubérance 63 solidaire du fond 14b du boîtier. Le sommet de la protubérance 63 présente un pivot 31a analogue à 31 sur la fig. 1. Le pourtour de l'écrou 62 est ondulé comme montré de façon exagérée en 64 sur la fig. 16. La surface intérieure de la protubérance 63 est de forme ondulée 65 correspondante. Ainsi, lorsqu'on fait tourner le boîtier par rapport au couvercle pour le fixer à ce dernier et pour bien appliquer le fond du boîtier contre le couvercle, l'écrou 62

11

est entraîné en rotation par le corps du dispositif, tant que le couple exercé sur ce corps n'excède pas un maximum prédéterminé. Une fois ce maximum atteint, si l'on continue de tourner le boîtier, la matière plastique des ondulations 65 de la protubérance 63 se déforme élastiquement et ces ondulations n'entraînent plus l'écrou 60 dont les ondulations 64 glissent alors dans cette protubérance 63.

Cette disposition constitue donc un limiteur de couple empêchant que l'on endommage le dispositif et le couvercle en agissant de façon trop énergique sur le boîtier pour visser l'écrou 62 sur la tige filetée 54b.

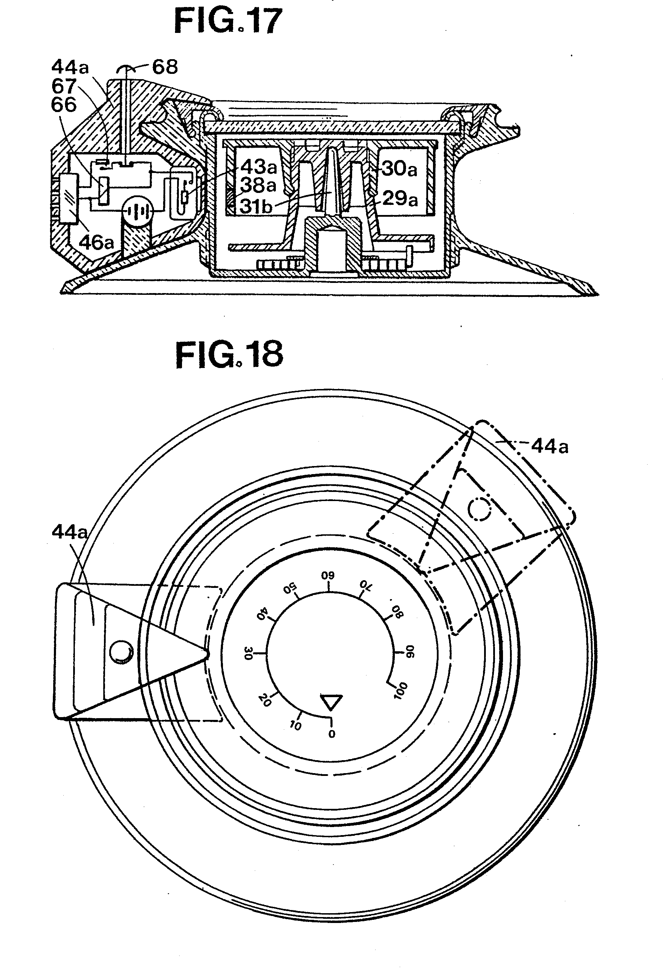

Dans la troisième forme d'exécution du dispositif représentée sur fig. 17, la construction du boîtier est la même que celle représentée sur la fig. 10. On se bornera ici à décrire les différences entre cette troisième forme d'exécution et les précédentes.

L'équipage mobile comporte, comme sur la fig. 1 deux parties 29a, 30a emboîtées l'une sur l'autre et tournant sur un pivot 31b. Toutefois, la pièce 30a est dépourvue d'une came telle que 40 et il n'y a pas de parties telles que 34 et 35 dans lesquelles un aimant 38 est disposé pour glisser radialement. Un petit aimant permanent 38a est logé dans une partie de la paroi cylindrique de la pièce 30a et tourne donc avec l'équipage mobile.

Un curseur 44a de forme générale analogue à 44 de fig.1 est adapté sur le boîtier pour pouvoir être déplacé sur le pourtour de celui-ci. A l'intérieur du curseur 44a, il est disposé un interrupteur du type Reed 43a agencé pour se fermer lorsque l'aimant 38a se trouve en alignement radial avec lui. En 46a se trouve le buzzer commandé par 43a mais ici la commande a lieu un peu différemment. Il est prévu un relais 66 qui est excité lorsque le contact de 43a se ferme. Ce relais commande un contact de fermeture 67 qui assure son maintien excité après que le contact de 43a se soit ouvert lorsque l'aimant 38a cesse d'être en regard de 43a. Ainsi

12

lorsque la température mesurée atteint, par exemple, 30°
qui est la température correspondant à la position du curseur
44a sur la figure 18, l'aimant 38a actionne l'interrupteur
43a, le relais 66 est excité, le buzzer 46a fonctionne. Grâce
au relais 66 ce buzzer continue de fonctionner même lorsque
la température continue d'augmenter et que l'aimant 38a n'est
plus en face du curseur 44a. L'usager est donc averti que la
première température de fin de chauffage rapide est atteinte
et, pour faire cesser le signal acoustique, il lui suffit
d'appuyer sur un bouton 68, pour provoquer l'ouverture du
circuit de maintien du relais 66. Si maintenant l'usager veut
être averti lorsqu'une autre température est atteinte, par
exemple 75° dans le cas de la fig. 18, il lui suffit de faire
tourner le curseur 44a pour l'amener dans la position représentée en traits mixtes pour que le buzzer 46a fonctionne
lorsque cette température de 75° est atteinte. On voit que
cette forme d'exécution permet de fournir un signal acoustique pour n'importe quelle température choisie par l'opérateur.

1

REVENDICATIONS

1. Dispositif thermométrique pour couvercle de récipient de cuisson, comportant un boîtier (11) formant bouton de couvercle et qui possède un fond (14) dont la surface extérieure est conformée pour s'appliquer sur la surface du couvercle (12), un élément thermométrique spiral bimétallique (27) étant disposé dans ce boîtier (11), un équipage mobile (29-30) indicateur de température étant monté pour tourner dans ce boîtier et pour être actionné par l'élément thermométrique, une glace (15) fermant la partie supérieure de ce boîtier en laissant voir à travers elle la partie indicatrice de l'équipage mobile, et des moyens de fixation étant prévus pour fixer le boîtier (11) au couvercle (12), caractérisé en ce que le fond (14) du boîtier (11) est déformable élastiquement lors de la fixation du boîtier (11) au couvercle (12), pour que la surface inférieure de son fond (14) se déforme et prenne alors exactement la forme du couvercle (12), et en ce que l'élément thermométrique spiral (27) est disposé à plat contre la face intérieure du fond (14) du boîtier (11), pour assurer une bonne transmission de la chaleur du couvercle à cet élément, par conduction à travers le dit fond.

2. Dispositif selon la revendication 1, caractérisé en ce que le boîtier est en matière plastique déformable élastiquement.

3. Dispositif selon la revendication 1 ou 2, caractérisé en ce que les moyens de fixation (20-23, 24-26) comprennent une partie (24-26) solidaire du boîtier (11), déplaçable angulairement, par rapport à une autre partie (24-26) de ces moyens qui, elle, est solidaire du couvercle (12), entre au moins une position inopérante où le dit boîtier (11) est libre, et au moins une position de travail, où le fond (14) de ce boîtier est appliqué contre le couvercle (12) par ces moyens de fixation (20-23, 24-26).

2

4. Dispositif selon la revendication 3, caractérisé en ce que les moyens de fixation sont du type à baïonnette à plusieurs positions angulaires de travail.

5. Dispositif selon la revendication 1 ou 2, caractérisé en ce que les moyens de fixation forment vis (54a) et écrou (55), la partie (54a) de ces moyens solidaire du couvercle étant une tige filetée, tandis que la partie (55) solidaire du boîtier (11a) comporte, d'une part, un élément formant écrou (55) prévu pour coopérer avec cette tige filetée (54a) et, d'autre part, un mécanisme limiteur de couple (57-60), intercalé entre le boîtier (11a) et cet écrou (55), pour que ce boîtier (11a) tourne par rapport à l'écrou (55) dès que le couple exercé sur ce boîtier (11a) excède une valeur maximum prédéterminée.

6. Dispositif selon l'une des revendications précédentes, caractérisé en ce que le boîtier en matière plastique présente une jupe (18) flexible dont le bord libre (19) fait contact avec le couvercle (12) avant le fond du boîtier, lorsqu'on fixe ce boîtier (11) au couvercle (12), et qui se déforme tout en restant en contact avec le couvercle (12), lorsqu'on fait tourner ce boîtier (11) pour le fixer au couvercle et pour amener son fond (14) en contact étroit avec ce couvercle (12).

FIG.1

FIG.2

## FIG. 3

23b · 11 · 18 · 20 · 26b · 28 · 27 · 14 · 20 · 19

## FIG. 4

18. · 11 · 44. · 49.

FIG. 5

FIG. 6

FIG. 7

FIG. 8

FIG. 9

## FIG.10

## FIG.11

**FIG.12**

61 60 58 57 13 55 56 14a 54a 12a

**FIG.13**

56 14 54a 14 57

**FIG.14**

59 55 57 58

**FIG.15**

31a 62 63 54b 16 16 14b 12b

**FIG.16**

63 62 64 54b 65

**FIG.17**

**FIG.18**